# EUROPEAN PATENT APPLICATION

(11) **EP 3 858 150 A1**
(43) Date of publication of application: **04.08.2021**
(21) Application number: 19881990.6
(22) Date of filing: 30.10.2019
(51) Int. Cl.: A23K 40/10, A23K 50/40

(54) **PET FOOD**

(30) Priority: 06.11.2018 US 201862756094 P; 28.12.2018 JP 2018247857
(71) Applicant: Unicharm Corporation, Shikokuchuo-shi, Ehime 799-0111 (JP)
(72) Inventor: USUI Takahiro, Itami-shi, Hyogo 664-0831 (JP); SAKAGUCHI Tomoko, Itami-shi, Hyogo 664-0831 (JP)
(74) Representative: Dolleymores
(86) International application number: PCT/JP2019/042604
(87) International publication number: WO 2020/095793

(57) **Abstract**

A pet food including a base material (10), and a grain (20) fixed on a surface of the base material (10), in which a particle diameter of the grain (20) is 0.5 to 20 mm.

## Description

### FIELD

The present invention relates to a pet food. This application claims priority based on US62/756,094 filed in the United States on November 6, 2018, and Japanese Patent Application No. 2018-247857 filed in Japan on December 28, 2018, the contents of which are incorporated herein by reference.

### BACKGROUND

A pet food can be categorized into a staple food and in-between meal snacks in a case where the feeding purposes are categorized with opportunity. The pet food as the staple food is called a "comprehensive nutritional food," which enables a pet to take necessary nutrients so long as the pet food and water are given to it. On the other hand, an "in-between meal snack" is a pet food that is intended to be given in a limited amount in a case of dog training and exercise, or as a reward. As classification according to the purposes, pet foods can be categorized into a "comprehensive nutritional food," "in-between meal snacks," "therapy diet," and a "food for other purposes" that does not fall under any of them.

In addition, as classification according to moisture contents, pet foods may be roughly categorized into a dry food with a moisture content of about 10%, a soft food with a moisture content of about 15% to 35%, and a wet food with a moisture content of about 80%.

It is important that a pet food has high palatability for pets, but it also needs to have a high appeal to consumers who purchase a pet food. Patent Literature 1 proposes a method for manufacturing a pet food, and a pet food obtained by this method, the method including: coating surfaces of pet food base material grains with oils and fats that are solid at room temperature; coating the pet food base material grains with a palatable material thereafter; and further dredging a powdery and granular material containing a taste component. It is thought that the above-mentioned pet food has high palatability for pets, and in addition, this pet food has an excellent appearance that sufficiently appeals to the pet owners who purchase the pet food, which turns out increasing buying motives of the pet owners and the like. Furthermore, Patent Literature 2 proposes a pet food composition including visually identifiable multiple pieces of kibble containing one or more micronutrient particles containing one or more kinds of micronutrients, in which the micronutrient particles are in a state of being incorporated inside the kibble.

### [CITATION LIST]

### [PATENT LITERATURE]

Patent Literature 1: Japanese Unexamined Patent Publication No. 2010-166853
Patent Literature 2: Japanese Patent Application Laid-Open No. 2016-536984

### SUMMARY

### [TECHNICAL PROBLEM]

However, in the pet food disclosed in Patent Literature 1, the palatable material is fine particles having an average particle diameter of about 60 µm or less, and the powdery and granular material is also fine particles having an average particle diameter of about 60 to 250 µm, which makes it difficult to visually find out what kind of raw materials are used for the palatable material and the powdery and granular material dredged to a base material. In addition, since particles of the palatable material and the powdery and granular material dredged to a base material are fine particles, an appeal to consumers is not sufficient. Furthermore, in the pet food disclosed in Patent Literature 2, since the micronutrient particles are incorporated inside the kibble, the micronutrient particles do not appear on a surface, which makes an appeal insufficient. Furthermore, even in a case where the micronutrient particles appear on a surface, these are in a state of being mixed with a base material, and therefore the original color, form, and the like of the micronutrient particles are less likely to be recognized, which makes an appeal insufficient.

The present invention has been made in view of the above circumstances, and an object of the present invention is to provide a pet food with high palatability for pets and a high appeal to consumers who purchase a pet food.

### [SOLUTION TO PROBLEM]

The present invention has the following aspects.
[1] A pet food including: a base material; and a grain fixed on a surface of the base material, in which a particle diameter of the grain is 0.5 to 20 mm.
[2] The pet food according to [1], in which the particle diameter of the grain is 1 to 20 mm.
[3] The pet food according to [1] or [2], in which a longest diameter of the base material is 5 to 200 mm, a shortest diameter of the base material is 1 to 100 mm, and the base material is larger than the grain.
[4] The pet food according to any one of [1] to [3], in which the grain includes one or more selected from the group consisting of small pieces of vegetable, small pieces of fruit, small pieces of meat, small pieces of fish, small pieces of dairy product, small pieces of cereal, and small pieces of bean.
[5] The pet food according to any one of [1] to [4], in which the base material has a plate shape.
[6] The pet food according to any one of [1] to [5], in which the pet food is a steamed food.

### [ADVANTAGEOUS EFFECT OF THE INVENTION]

According to the present invention, it is possible to obtain a pet food with high palatability for pets and a high appeal to consumers who purchase a pet food.

### BRIEF DESCRIPTION OF DRAWINGS

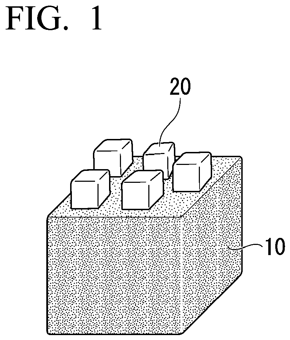

[Fig. 1] Fig. 1 is a schematic view showing an example of a pet food according to the present embodiment.

### DESCRIPTION OF EMBODIMENTS

In the present specification, the term "pet" refers to an animal raised by a person. In a narrower sense, pets are animals that are kept and loved by their owners. In addition, the term "pet food" refers to feed for pets. A pet food according to the present invention can be sold as an "animal feed" or "animal food."

In the present specification, "palatability" is an index of whether or not a pet food is preferred and eaten by a pet, and is caused by mouthfeel, taste, odor, and the like. In the present specification, a case in which "coating" of a powder is performed means that the powder is applied to surfaces of grains to be dredged to the surfaces of the grains. In the present specification, a case in which "coating" of a liquid is performed means that the liquid is applied to surfaces of grains to be dredged to the surfaces of the grains, and the case also includes a case in which the grains are impregnated with some or whole of the applied liquid. For example, a case in which "coating" of oils and fats is performed means that the oils and fats are applied to surfaces of grains to be dredged to the grains, and the case also includes a case in which the grains are impregnated (soaked) with some or whole of the applied oils and fats.

In the present specification, a value of a moisture content is a value obtained by an atmospheric heating and drying method. In the atmospheric heating and drying method, a subject to be measured is pulverized in a pulverizer by passing the subject through a 1 mm sieve. Then the pulverized subject is used as an analysis sample, and 2 to 5 g of the analysis sample is accurately weighed and placed in an aluminum weighing dish. After the analysis sample is dried at 135°C for 2 hours and cooled in a desiccator, a weight of the analysis sample is accurately weighed again, so that moisture content is obtained from the weight difference in the analytical sample before and after drying. More specifically, the subject to be measured is pulverized by a pulverizer such that the subject passes through a 1 mm sieve, and this pulverized product is used as an analysis sample. A mass (W1 gram) of an aluminum weighing can is measured in advance as a constant value. The analysis sample is placed in this aluminum weighing can, and a mass (W2 gram) is weighed. The analysis sample is then dried at 135°C for 2 hours using a forced circulation type hot air dryer. After allowing the analysis sample to cool in a dry atmosphere (in a silica gel desiccator), a mass (W3 gram) is weighed. From each mass obtained, a moisture content of the analysis sample is obtained using the following formula. Moisture content (unit: mass%) of analysis sample = (W2 - W3)/(W2 - W1) × 100A moisture content is a value measured immediately after opening a final product within 30 days from a date of manufacture, or a value measured under the same conditions as above.

In the present specification, a particle diameter of a grain means a diameter when a shape of the grain is spherical, and means a longest diameter when a shape of the grain is other than spherical (cylindrical, polygonal columnar, plate-like, and the like).

### (Pet food)

A pet food according to the present embodiment is a pet food including a base material, and a grain fixed on a surface of the base material, in which a particle diameter of the grain is 0.5 to 20 mm. More specifically, the pet food according to the present embodiment is a pet food including a base material, and a grain protruding from an outer surface of the base material and fixed on the outer surface of the base material, in which a particle diameter of the grain is 0.5 to 20 mm. In the pet food according to the present embodiment, because a grain having a relatively large particle diameter is fixed on the surface of the base material, the pet food has high palatability for pets and a high appeal to consumers who purchase a pet food.

Fig. 1 is a schematic view showing an example of the pet food according to the present embodiment. As shown in Fig. 1, grains 20 are fixed on a surface of a base material 10. The grains 20 protrude from an outer surface of the base material 10 and are fixed on the outer surface of the base material 10. In the example shown in Fig. 1, the grains 20 are fixed on only one surface of the base material 10. However, in the present embodiment, the grains 20 may be fixed on a plurality of surfaces of the base material 10, or may be fixed on all surfaces of the base material 10. Among the cases, the grains 20 are preferably fixed on only one surface of the base material 10 from the viewpoint of improving an appeal to consumers who purchase a pet food.

A case in which grains are fixed on a surface of the base material is referred to, it means that the grains adhere to the base material by an arbitrary method, and the grains do not easily fall off from the base material. In addition, the case in which the grains do not easily fall off from the base material is referred to, it means, for example, a case in which a force is 2N or more, the force being applied until the grains are peeled off from the base material by vertically applying a force only to the grains using a compact table-top universal testing machine (trade name "EZ test EZ-SX," manufactured by Shimadzu Corporation) while holding the pet food such that a surface of the base material on which the grains are fixed is disposed in a vertical direction.

The number of grains fixed on a surface of the base material is not particularly limited, but it is preferably two or more and is more preferably three or more from the viewpoint of improving palatability for pets and an appeal to consumers. In a case where a plurality of grains are fixed on a surface of the base material, it is sufficient for a particle diameter of at least one of the grains to be 0.5 to 20 mm.

A method of fixing grains on the base material is not particularly limited, and examples thereof include a method of fixing using a liquid raw material such as oils and fats, a method of fixing using a gelling agent or emulsifier, and the like. Examples of the gelling agent include gelatin, agar, carrageenan, pectin, locust bean gum, xanthan gum, guar gum, gum arabic, taraya gum, karaya gum, alginic acid, tara gum, starch, and the like. Examples of the emulsifier include glycerin fatty acid ester and the like.

Among the methods, the method of fixing grains on the base material is preferably the method of fixing using a gelling agent from the viewpoint that then, even a large grain having a particle diameter of 0.5 to 20 mm can be sufficiently fixed on the base material. That is, the pet food according to the present embodiment is preferably a pet food including a base material, and grains fixed on a surface of the base material by a gelling agent. The case in which grains are fixed by a gelling agent includes any of a case (a) in which grains are fixed by coating a base material with a gelling agent and dredging grains thereto, a case (b) in which grains are fixed by coating a base material and grains with a gelling agent, and a case (c) in which grains are fixed by incorporating a gelling agent into a base material or grains.

The pet food in the present embodiment is preferably an in-between meal snack (snack). Furthermore, from the viewpoint of improving palatability, the pet food in the present embodiment is preferably a baked food or steamed food (hereinafter also referred to as steamed food or the like), and is more preferably a steamed food. The case in which the pet food is a steamed food or the like includes any of a case in which a base material and grains are manufactured using a raw material in a steamed or baked state, and a case in which a base material and grains are respectively manufactured using an uncooked raw material and steamed or baked in a subsequent manufacturing process, and thereby a finally obtained pet food (the base material and the grains) becomes a steamed food or the like.

Hereinafter, each of the components contained in the pet food according to the present embodiment will be described in detail.

### <Base material>

As a raw material for a base material constituting the base material in the present embodiment, it is possible to use a powder raw material or a liquid raw material known in manufacturing of a pet food. Specific examples of powder raw materials include cereals (corn, wheat, wheat flour, wheat bran, rice, bread crumbs, barley, oat, rye, and the like), potatoes (sweet potatoes, potatoes, and the like), beans (whole soybeans and the like), starches (wheat starch, corn starch, rice starch, potato starch, tapioca starch, sweet potato starch, sago starch, modified starch, and the like), vegetable proteins (corn gluten meal, wheat protein, bean protein, rice protein, potato protein, and the like), meat (meat of domesticated or wild animals such as cows, pigs, sheep, deer, and rabbits; meat of fowl such as chickens, turkeys, quails, and domestic poultry; meal (chicken meal, pork meal, beef meal, mixed meal of these); and the like), fish and seafood (fishes such as tuna, bonito, and horse mackerel; crustaceans such as shrimp and crab; mollusks such as octopus and squid; shellfishes such as scallops and turban shells; fish extracts; Katsuobushi (dried bonito flakes); meal (fish meal); and the like), vegetables, nuts and seeds, mushrooms, eggs, sugars, milk, additives (vitamins, minerals, amino acids, flavor ingredients, powdery palatability enhancers, fibers, colorants, phosphates, pH adjusters, seasonings, antioxidants, trehalose, and the like), and the like. Meal means a powder obtained by compressing and finely crushing meat or fish and seafood. More specific examples of powdery palatability enhancers include animal raw material extracts, plant raw material extracts, yeast extracts, dried products of yeast, and the like. Specific examples of liquid raw materials (including semi-solid raw materials) include water, oils and fats (animal oils and fats such as chicken oil (chicken oil), pork fat (lard), beef fat (tallow), milk fat, and fish oil; and vegetable oils and fats such as olive oil, cacao oil, palm oil, palm kernel oil, coconut oil, palm oil, and camellia oil), liquid palatability enhancers, liquid sugars, moisturizers, preservatives, emulsifiers, flavorants, colorants, and the like.

Among the above examples, a raw material for a base material constituting the base material is preferable a mixture of (a) meat (meat of domesticated or wild animals such as cows, pigs, sheep, deer, and rabbits; meat of fowl such as chickens, turkeys, quails, and domestic poultry; meal (chicken meal, pork meal, beef meal, mixed meal of these); and the like), (b) cereals (corn, wheat, wheat bran, rice, bread crumbs, barley, oat, rye, and the like), (c) moisturizers (glycerin, sugar alcohol, and the like), (d) oils and fats (animal oils and fats such as chicken oil (chicken oil), pork fat (lard), beef fat (tallow), milk fat, and fish oil; and vegetable oils and fats such as olive oil, cacao oil, palm oil, palm kernel oil, coconut oil, palm oil, and camellia oil), and (e) additives (vitamins, minerals, amino acids, flavor ingredients, powdery palatability enhancers, fibers, colorants, phosphates, pH adjusters, seasonings, antioxidants, and the like).

Among the above examples, the (a) meat is preferably chicken meat, is more preferably chicken breast fillets, chicken bones for broth, or chicken livers, and is even more preferably chicken breast fillets.

A content of the (a) meat is preferably 10% to 50% by mass, is more preferably 20% to 50% by mass, and is even more preferably 30% to 50% by mass, with respect to a total amount of the base material. When a content of the (a) meat is within the above range, palatability is further improved.

A blending example for the base material in the case of in-between meal snacks is shown below. (Blending example for base material)Chicken meat: 0% to 60%, wheat flour: 0% to 80%, moisturizer: 1% to 30%, animal oils and fats: 0% to 10%, and additive: 0% to 10%

A suitable blending example for the base material in the case of in-between meal snacks is shown below. Chicken breast fillet: 30% to 40%, wheat flour: 5% to 20%, moisturizer: 15% to 30%, animal oils and fats: 1% to 6%, and additive: 0% to 10%

A moisture content of the base material according to the present embodiment is preferably 5% to 40% by mass, is more preferably 10% to 35% by mass, and is even more preferably 15% to 30% by mass. When a moisture content is within the above range, sufficient palatability can be obtained.

A shape of the base material in the present embodiment may be any shape suitable for pets to eat, and is not particularly limited. For example, it possible to apply any shape such as spherical, ellipsoidal (go-stone-like), donut-like, pellet-like, cylindrical, polygonal, plate-like, clover-like, heart-like, star-like, and cross-like shapes. Among them, from the viewpoint of an appeal to consumers, a shape is preferably polygonal or plate-like, and is more preferably plate-like.

Regarding a size of the base material, the base material may be in a small grain form that a pet can chew with a bite, or may be in a large grain form that a pet can bite multiple times. A longest diameter of the base material is preferably 5 to 200 mm, is more preferably 10 to 150 mm, and is even more preferably 10 to 100 mm. Furthermore, a shortest diameter of the base material is preferably 1 to 100 mm, is more preferably 1 to 50 mm, and is even more preferably 5 to 25 mm. When a size of the base material is within the above range, an appeal to consumers is further improved.

### <Grains>

As a raw material for grains constituting the grains in the present embodiment, it is possible to use the above-described powder raw materials, liquid raw materials, and mixtures thereof which are known in manufacturing of a pet food.

Among the above examples, a raw material for grains constituting the grains preferably includes one or more selected from the group consisting of small pieces of vegetable, small pieces of fruit, small pieces of meat, small pieces of fish, small pieces of dairy product, small pieces of cereal, and small pieces of bean.

### <<Small pieces of vegetable>>

Examples of small pieces of vegetable include sweet potatoes, pumpkins, carrots, kidney beans, tomatoes, broccolis, asparaguses, and the like. Among the above examples, sweet potatoes, pumpkins, carrots, and kidney beans are preferable from the viewpoint of an appeal to consumers. Furthermore, a raw material for small pieces of vegetable may be raw or dried, but it is preferably freeze-dried.

### <<Small pieces of fruit>>

Examples of small pieces of fruit include apples, tomatoes, bananas, pears, strawberries, cranberries, blueberries, raspberries, and the like. Among the above examples, apples, bananas, and strawberries are preferable from the viewpoint of an appeal to consumers. Furthermore, a raw material for small pieces of fruit may be raw or dried, but it is preferably freeze-dried.

### <<Small pieces of meat>>

Examples of small pieces of meat includes meat of domesticated or wild animals such as cows, pigs, sheep, deer, and rabbits; meat of fowl such as chickens, turkeys, quails, and domestic poultry; (chicken meal, pork meal, beef meal, mixed meal of these); and the like. Among the above examples, beef meat, pork meat, and chicken meat are preferable from the viewpoint of an appeal to consumers.

### <<Small pieces of fish>>

Examples of small pieces of fish include fish meat, meal (fish meal), shellfishes, Kamaboko (boiled fish paste), Katsuobushi (dried bonito flakes), and the like. Among the above examples, fish meat and Kamaboko (boiled fish paste) are preferable from the viewpoint of an appeal to consumers.

### <<Small pieces of dairy product>>

Examples of small pieces of dairy product include cheese, butter, yogurt, milk, milk powder, and the like. Among the above examples, cheese or the like is preferable from the viewpoint of an appeal to consumers. Furthermore, a raw material for small pieces of dairy product is preferably freeze-dried.

### <<Small pieces of cereal>>

Examples of small pieces of cereal include corn, wheat, wheat flour, wheat bran, rice, bread crumbs, barley, oat, rye, and the like.

### <<Small pieces of bean>>

Examples of small pieces of bean include whole soybeans, processed soybeans, lentil beans, red beans, chickpeas, peas, and the like.

Among the above examples, it is more preferable that one or more selected from the group consisting of small pieces of vegetable and small pieces of dairy product be included from the viewpoint of giving a healthy impression. In addition, in order to appeal a healthy impression to consumers at first glance, with respect to 100% by mass as a total amount of grains, it is preferable that small pieces of vegetable, small pieces of fruit, small pieces of meat, small pieces of fish, small pieces of dairy product, small pieces of cereal, or small pieces of bean be contained in an amount of 70% by mass or more; it is more preferable that small pieces of vegetable or small pieces of dairy product be contained in an amount of 70% by mass or more; and it is even more preferable that small pieces of vegetable or small pieces of dairy product be contained in an amount of 80% by mass or more.

In addition, in order to appeal a healthy impression to consumers at first glance, with respect to 100% by mass as a total amount of grains, it is preferable that one kind of small pieces of vegetable, small pieces of fruit, small pieces of meat, small pieces of fish, small pieces of dairy product, small pieces of cereal, or small pieces of bean be contained alone in an amount of 70% by mass or more; it is more preferable that one kind of small pieces of vegetable or small pieces of dairy product be contained alone in an amount of 70% by mass or more; and it is even more preferable that one kind of small pieces of vegetable or small pieces of dairy product be contained alone in an amount of 80% by mass or more.

A particle diameter of a grain is 0.5 to 20 mm, and it is preferably 1 to 20 mm and is more preferably 1 to 10 mm. When a size of a grain is within the above range, an appeal to consumers is further improved.

In addition, a size of a grain is smaller than that of the base material, and it is preferably 0.0001 to 0.99 times and is more preferably 0.0001 to 0.4 times a size of the base material.

A particle diameter of a grain can be measured by, for example, a caliper, a micrometer, an image analysis, or the like.

### (Method for manufacturing pet food)

As a method for manufacturing the pet food of the present embodiment, it is possible to use, for example, a known method to be described later.

### [Base material production process]

A base material production process is a process of kneading a mixture of raw materials for a base material to produce a base material by extrusion molding. As the base material production process, the following is specifically performed: a raw material for a base material is put into a kneading extruder and kneaded at a temperature of -5°C to 25°C, water or ice is added thereto until a moisture content reaches 30% or more, extrusion molding is performed after the adjustment, and thereby a base material is produced.

### [Grain fixing process]

A grain fixing process is a process of fixing the base material obtained by the above-described [Base material production process] with grains. The grains may be any of grains produced by extrusion molding a mixture of raw materials for grains in the same manner as described above, grains (swollen grains) produced by granulating a mixture of raw materials for grains by an extruder or the like, or the above-described raw materials themselves.

Examples of methods of fixing a base material and grains include a method of coating a base material with a liquid raw material such as oils and fats and fixing grains thereto, a method of coating a base material with a gelling agent or emulsifier and fixing grains thereto, and the like. Furthermore, in the above-mentioned methods, a base material and grains may be fixed by dredging the grains to the base material, and coating them with a liquid raw material such as oils and fats, or coating them with a gelling agent or emulsifier. As the grain fixing process, the following is specifically performed: a gelling agent or emulsifier is dredged to a base material flowing on a belt conveyor so that the base material is coated therewith, grains filled in a hopper are dropped so that the grains are dredged to the base material coated with the gelling agent or emulsifier, and thereby the base material and the grains are fixed.

### [Heating process]

A heating process is a process of heating a base material and grains fixed by the above-described [Grain fixing process] (hereinafter, referred to as the base material and the grains). In the heating process, the base material and the grains may be heated by firing, or the base material and the grains may be heated by steaming.

In a case of firing the base material and the grains, a heating temperature (firing temperature) for the base material and the grains is preferably 80°C to 140°C, and is more preferably 90°C to 120°C. Furthermore, a heating time (firing time) for the base material and the grains is preferably 20 to 60 minutes, is more preferably 25 to 50 minutes, and is even more preferably 30 to 45 minutes.

In a case of steaming the base material and the grains, it is preferable to perform steaming with water vapor at 85°C to 105°C for 3 to 10 minutes.

### [Arbitrary process]

The method for manufacturing the pet food of the present embodiment may include processes other than the above-described processes, and examples thereof include <<water spraying process>> and <<drying process>>.

### <<Water spraying process>>

The water spraying process is a process of coating the base material (and the grains) with a gelling agent or emulsifier, and then spraying water thereon in a case where a gelling agent or emulsifier is used in the above-described [Grain fixing process]. The base material (and the grains) can be sufficiently coated with the gelling agent or emulsifier by spraying water on the gelling agent or emulsifier, and thereby the base material and the grains can be sufficiently fixed.

### <<Drying process>>

The drying process is a process of drying the base material and the grains to obtain a desired moisture content thereof after the above-described [Heating process]. Examples of methods of drying the base material and the grains include known methods such as a method of drying naturally, a method of drying by blowing warm air, a method of drying by decompressing, and a method of drying by freeze-drying.

A temperature of warm air is preferably 50°C to 80°C in a case of drying by blowing warm air. A drying time is preferably 30 to 300 minutes in a case of drying in this temperature range. EXAMPLES

Hereinafter, the present invention will be described in more detail with reference to examples, but the present invention is not limited to these examples.

### <Examples 1 and 2>

### [Base material production process]

A raw material for a base material in a formulation shown in Table 1 was put into a kneading extruder, and was kneaded at a temperature of 20°C. A moisture content was adjusted so that it reached 30% or more, and extrusion molding was performed after the adjustment. Thereby, a base material was produced.

### [Grain fixing process]

The base material was coated with a gelling agent. A freeze-dried cheese as grains was fixed to the base material in Example 1, and a freeze-dried pumpkin as grains was fixed to the base material in Example 2.

### [Steaming process]

The fixed base material and grains were steamed with water vapor at 90°C for 5 minutes.

### [Drying process]

The fixed base material and grains were dried so that a moisture content of the base material reached about 30%, and thereby pieces of pet food of Examples 1 and 2 were produced.

**[Table 1]**

| | Examples 1 and 2 |
|---|---|
| Chicken breast fillet | 40 |
| Wheat flour | 20 |
| Moisturizer | 30 |
| Animal oils and fats | 5 |
| Additive | 5 |
| Total (% by mass) | 100 |

### [Evaluation of grain size]

Five pieces of the pet food of Examples 1 and 2 were respectively produced, grains fixed thereto were removed one by one, and sizes (longest diameters) of the grains were respectively measured with a caliper. An average value of the sizes (mm) of the grains is shown in Table 2.

### [Evaluation of adhesion strength between base material and grains]

A force (N) was measured, the force being applied until the grains were peeled off from the base material by vertically applying a force only to the grains using a compact table-top universal testing machine (trade name "EZ test EZ-SX," manufactured by Shimadzu Corporation) while holding pieces of the pet food of Examples 1 and 2 such that a surface of the base material on which the grains were fixed was disposed in a vertical direction. The results are shown in Table 3.

### [Evaluation of appearance of pet food]

On the same base material as Example 1, a freeze-dried cheese with a size of 0.1 mm × 0.1 mm and a thickness of 0.1 mm was fixed to the base material, and thereby a pet food of Comparative Example 1 was manufactured. The pet food of Example 1 was compared with the pet food of Comparative Example 1 to conduct a questionnaire with a question regarding "which pet food would you like to give to your pet?" (number of monitors: 17 people). Among a total number of answers to the above question, a rate of people, who answered the pet food of Example 1 rather than the pet food of Comparative Example 1 is the one that "I want to give to my pet," was calculated at a percentage (unit: %). The results are shown in Table 4.

**[Table 2]**

| | Size of grain |
|---|---|
| Example 1 | 12 mm × 12 mm / thickness: 6 mm |
| Example 2 | 12 mm × 12 mm / thickness: 6 mm |

**[Table 3]**

| | Adhesion strength (N) |
|---|---|
| Example 1 | 8.93 |
| Example 2 | 3.13 |

**[Table 4]**

| Invention of present application | Comparison target | Selected rate |
|---|---|---|
| Example 1 | Comparative Example 1 | 100% |

It could be confirmed that it was possible to produce a pet food as shown in Fig. 1 including a base material, and a grain fixed on a surface of the base material, in which a particle diameter of the grain is 0.5 to 20 mm, as shown in Tables 2 and 3.

As shown in Table 4, as compared to the pet food of Comparative Example 1, people thought the pet food of Example 1, in which a particle diameter of a grain fixed on a surface of a base material was large, is a pet food that I want to give to my pet, because it is novel and highly aesthetical. This shows that the pet food of Example 1 was highly evaluated.

According to the present invention, it is possible to obtain a pet food with high palatability for pets and a high appeal to consumers who purchase a pet food.

Although preferable examples of the present invention have been described above, the present invention is not limited to these examples. Configurations can be added, omitted, and replaced, and other modifications can be made within a range not departing from the spirit of the present invention. The present invention is not limited by the above descriptions, but only by the scope of the appended claims.

### REFERENCE SIGNS LIST

10 Base material
20 Grain

## Claims

1. A pet food comprising:
a base material; and
a grain fixed on a surface of the base material,
wherein a particle diameter of the grain is 0.5 to 20 mm.

2. The pet food according to claim 1, wherein the particle diameter of the grain is 1 to 20 mm.

3. The pet food according to claim 1 or 2, wherein a longest diameter of the base material is 5 to 200 mm, a shortest diameter of the base material is 1 to 100 mm, and the base material is larger than the grain.

4. The pet food according to any one of claims 1 to 3, wherein the grain includes one or more selected from the group consisting of small pieces of vegetable, small pieces of fruit, small pieces of meat, small pieces of fish, small pieces of dairy product, small pieces of cereal, and small pieces of bean.

5. The pet food according to any one of claims 1 to 4, wherein the base material has a plate shape.

6. The pet food according to any one of claims 1 to 5, wherein the pet food is a steamed food.
